Europäisches Patentamt

(19) European Patent Office

Office européen des brevets

(11) Publication number: **0 079 735**

**A2**

(12) **EUROPEAN PATENT APPLICATION**

(21) Application number: **82305915.9**

(22) Date of filing: **05.11.82**

(51) Int. Cl.³: **B 29 D 3/02**

(30) Priority: **17.11.81 GB 8134649**

(43) Date of publication of application:
**25.05.83 Bulletin 83/21**

(84) Designated Contracting States:
**DE FR GB IT**

(71) Applicant: **WESTLAND plc**

**Yeovil Somerset(GB)**

(72) Inventor: **Mills, John Barry**
**19 Primrose Lane**
**Yeovil Somerset(GB)**

(74) Representative: **Jack, Bruce James et al,**
**FORRESTER & BOEHMERT Widenmayerstrasse 4/1**
**D-8000 Munchen 22(DE)**

(54) **Apparatus for use in the manufacture of composite articles.**

㊌ The apparatus comprises a tape laying device (10) having a rotatable spool (12) adapted to support a roll of pre-impregnated fibre-reinforced tape material (13), guide means (16, 25) for guiding tape material from the roll on to a laying-up surface and resilient pressure means preferably comprising a brush (14) supported so that its bristles (15) extend towards the surface to force the tape material into contact with the laying-up surface whereby a layer of tape material is laid on to the laying-up surface and in conformity with the shape thereof as the device is moved relatively to the laying-up surface.

A plurality of the tape laying devices (10) are utilised in a manufacturing installation disclosed in the specification.

FIG.3

Croydon Printing Company Ltd

Title: "Apparatus for use in the manufacture of composite articles"

THIS INVENTION relates to the manufacture of composite articles and particularly to the laying-up of pre-impregnated fibre-reinforced tape material in the manufacture of such articles.

The manufacture of composite articles or components from fibre-reinforced tape material normally involves, inter alia, laying-up the tape material in two stages: in a first stage, successive layers of tape material are laid onto a flat bed to build up a slab of material which in a second stage is lifted from the bed and laid manually into a mould tool. In the first stage, a roller is usually used to lay down the tape material on the bed.

This procedure is, for instance, used in the manufacture of helicopter rotor blades which have a curved external cross-sectional shape and are of considerable lengths, and in this application the current techniques are time-consuming, costly and inefficient.

An objective of the invention is to provide apparatus to facilitate and improve the laying-up of the tape material in this and other applications of composite article manufacture.

Accordingly, in one aspect, the invention provides apparatus for use in the manufacture of composite articles, characterised by a tape laying device comprising a frame structure movable relatively to a laying-up surface and having a rotatable spool adapted to support a roll of pre-impregnated fibre-reinforced tape material, guide means for guiding tape material from the roll onto the said laying-up surface, and resilient pressure means adapted to force said tape material into contact with the laying-up surface, whereby a layer of tape material may be laid onto the laying-up surface and in conformity with the shape thereof as the device is moved relatively thereto.

The device may include second and third rotatable spools on the frame structure and respectively so disposed in relation to the first said rotatable spool as to be adapted during operation to receive and store a backing strip from each surface of the tape material. Preferably the or each rotatable spool is power driven.

The resilient pressure means may comprise a brush supported on the frame structure so that its bristles extend towards the laying-up surface. Preferably, the brush is located at a distance from the laying-up surface that is less than the free length of the bristles, and the brush comprises at least three successive rows of bristles.

The brush may be movably supported on the frame structure and be associated with pressure sensitive means adapted to vary the position of the brush in order to adjust, e.g. maintain constant, the pressure applied to the tape material by the brush.

The guide means may comprise a curved tape guide member extending in front of the brush and around which the tape material is routed. Alternatively, the guide means may comprise a roller located in front of the brush and around which the tape material is routed.

Tape positioning means may be provided and be adapted to automatically retain one edge of the tape in register with a datum. The tape positioning means may comprise a positioning roller around which the tape is routed, one end of the positioning roller being pivotally attached to the frame structure and the other end being attached to means for adjusting the attitude of the roller in the frame structure. The operation of the adjusting means for the positioning roller may be controlled automatically in response to a signal from a tape positioning sensor operatively associated with said tape guide means. Preferably, the sensor is a pneumatic sensor and the positioning roller adjusting means comprises a pneumatic cylinder.

In one form of the invention, the frame structure is arranged to be traversed with respect to the laying-up surface by being equipped with wheels, at least one of which is power driven, adapted to run on a track related to the laying-up surface. In another form, the apparatus may comprise a powered transporter adapted for releasable attachment to the laying device to move the latter relatively to the laying-up surface.

Conveniently, in this form the transporter may run on rails located parallel to and to one side of the laying-up surface and be arranged for selective attachment to any one of a plurality of tape laying devices parked near the opposite side of the surface.

In another aspect, the invention provides apparatus for use in the manufacture of composite articles, characterised by a base supporting structure; a plurality of tape laying devices located on the structure and each having a first rotatable spool for supporting a roll of pre-impregnated fibre reinforced tape material, guide means for guiding tape from the roll onto a laying-up surface of a tool supported by the base structure, second and third rotatable spools adapted to receive and store backing material from each surface of the tape material, and resilient pressure means adapted to force said tape material on to the tool laying-up surface; and a powered transporter for selective attachment to any one of the tape laying devices and adapted to move such device along the base structure, whereby a layer of tape material may be laid on to the laying-up surface of the tool and in conformity with the shape thereof.

Preferably, the transporter includes power means adapted to rotate the three spools of the device to which it is attached. The transporter may be controlled by a computer programmed to select a desired tape laying device in order to lay a plurality of different tape materials on the tool laying-up surface in a desired sequence.

The invention will now be described by way of example only and with reference to the accompanying drawings in which:

FIGURE 1 is a longitudinal sectioned view of apparatus constructed in accordance with one embodiment of the invention;

FIGURE 2 is a fragmentary longitudinal sectioned view of a modification of part of the apparatus of Figure 1;

FIGURE 3 is a longitudinal sectioned view of apparatus constructed in accordance with a preferred embodiment;

FIGURE 4 is a fragmentary view taken on arrow A of Figure 3; and

FIGURE 5 is a perspective illustration of a preferred form of manufacturing installation incorporating apparatus constructed in accordance with the invention.

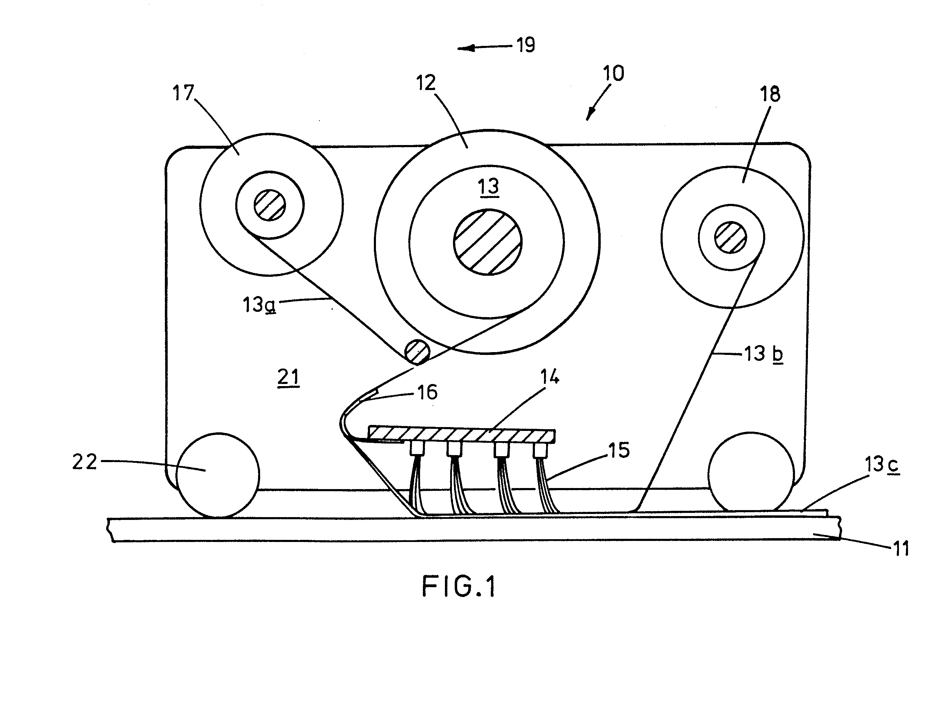

Apparatus in accordance with one embodiment of the invention, for use in the manufacture of composite articles, comprises a tape laying device, generally indicated at 10 (Figure 1), for laying pre-impregnated, fibre-reinforced tape material onto an upper, laying-up, surface of a tool 11. The device 10 includes a frame structure having laterally spaced-apart generally vertical side plates 21 (one only being shown). A first rotatable spool 12 is located between the side plates 21 and supports a roll of pre-impregnated fibre-reinforced tape material 13. The tool 11 comprises one half of a mould tool for producing a helicopter rotor blade and has a non-planar upper laying-up surface.

Located beneath the spool 12 and parallel thereto is a brush 14 consisting of four longitudinally spaced-apart rows of nylon bristles 15, the brush 14 being located at a distance from the upper surface of the tool 11 that is less than the free length of the bristles 15. Tape guide means consisting of a curved metal strip 16 is located at one end of the brush 14.

Second and third rotatable spools 17 and 18 are located between the side plates 21 and are disposed one at each side of the first spool 12. The spools 17 and 18 are adapted to receive and store the protective backing strips customarily provided on both surfaces of the tape material 13 and that have to be removed from the latter during laying-up thereof.

The device 10 is provided with wheels 22 attached to side plates 21 to facilitate its longitudinal movement relative the tool 11.

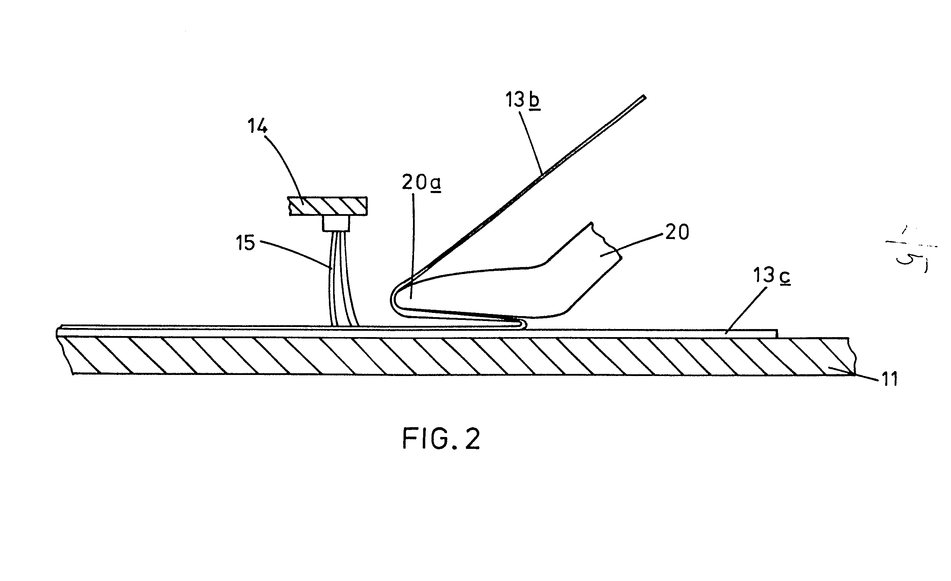

Figure 2 illustrates a modification of the device as above described. In this modification a guide member 20 is supported parallel to the brush 14 and on the side thereof opposite the tape guide member 16 (Figure 1). Guide member 20 has a radiussed nose portion 20a spaced-apart from the laying-up surface of the tool 11.

In operation of the apparatus of the embodiment of Figure 1, pre-impregnated fibre-reinforced tape material 13 from the roll supported on spool 12 is routed around the guide member 16 and onto the laying-up surface of tool 11 beneath the brush 14. The protective backing sheet 13a from one surface of the tape material 13 is wound onto the spool 17, and the protective backing strip 13b from the other surface of the tape material 13 is wound onto the spool 18. The strip 13b is only removed when the tape material has been laid on the tool, so that before its removal it may protect the tape material 13 by preventing contact with the guide 16 and the bristles 15 of the brush 14 while the tape material is being laid.

As the device 10 is moved along the tool 11 in the direction of arrow 19, tape material 13 is automatically withdrawn from the roll on spool 12 and is forced into conformity with the shape of the laying-up surface of the tool 11 by the bristles 15 of the brush 14. The backing strips 13a and 13b are wound respectively onto spools 17 and 18, thereby leaving the tape material 13 laid in conformity with the laying-up surface of the tool and illustrated at 13c in Figure 1.

Experiments have indicated that, in order to ensure a smooth traverse of the device along the length of the tool 11, the most remote (lowest) part of the tool laying-up surface should project up into the bristles 15 by at least 6mm. On the other hand, the nearest (highest) part of the laying-up surface should not project beyond about 14mm from the fixed ends of the bristles, because of loss of effect by bending of the bristles. Brushes tested had a bristle length of 40mm and thus offered a range of height difference across the laying-up surface of tool 11 of approximately 20mm. Clearly, this range would be extended by using a brush with longer bristles.

It has been found that the presence of two or more successive rows of bristles 15 aids consolidation of the tape material 13, and apparatus having up to four rows as illustrated have been tested.

Nylon bristles 15 were used in experiments and, whilst other bristle materials could be used, it will be clear that the stiffness of the bristles 15 affects the ability of the apparatus to force the flat tape material 13 into conformity with the shaped laying-up surface of the tool 11.

The stiffness of the protective backing strips 13a and 13b may also have an effect on the ability of the device 10 to lay the material 13 into acceptable conformity with the tool 11. Normally, the material 13 is provided with a relatively stiff backing paper on one side and a supple plastic film on the other, and it has been found advantageous to lay the material in such a way that the stiff paper is removed first, i.e. by being wound onto spool 17 as at 13a in Figure 1, thus leaving the plastic film on the side that contacts the guide 16 and is subjected to the pressure of the bristles 15. The plastic film backing strip is subsequently wound onto spool 18 as indicated at 13b in Figure 1.

The modification illustrated in Figure 2 ensures that the removal of the backing strip 13b does not tend to lift the tape material from the laying-up surface of the tool 11. In this respect, the provision of the guide 20 following the brush 14 serves to reverse the direction of the backing strip 13b thereby removing the backing strip 13b in a peeling action.

It may be desirable to apply a release agent to the laying-up surface of the tool 11 in order to facilitate removal of the component after curing, and it will therefore be necessary to provide a means of fixing the first layer of tape material 13 to the tool in a manner to withstand the tension in the tape material 13 as it is laid into the tool. It has been found that a strip of double-sided adhesive tape can be used satisfactorily for this purpose and is required only in respect of the first layer since the normal adhesive properties of the tape material 13 have been found to be sufficient to retain subsequent layers. The strip of adhesive tape is required only at the beginning of the laying run and can, conveniently, be provided on a sacrificial over-run area that is subsequently trimmed from the finished component.

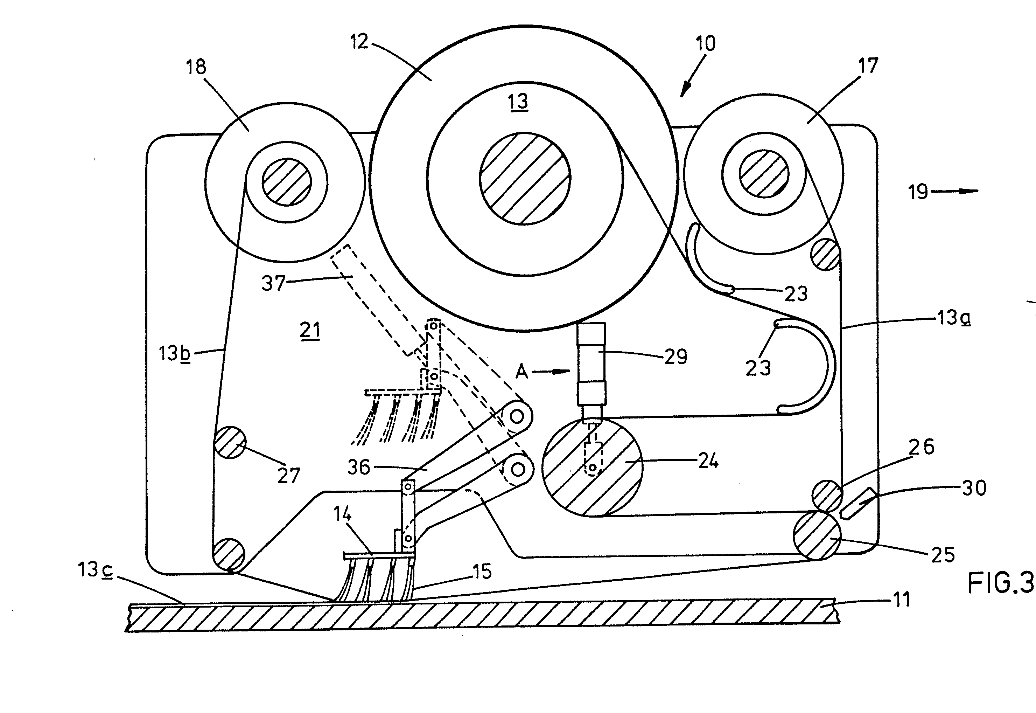

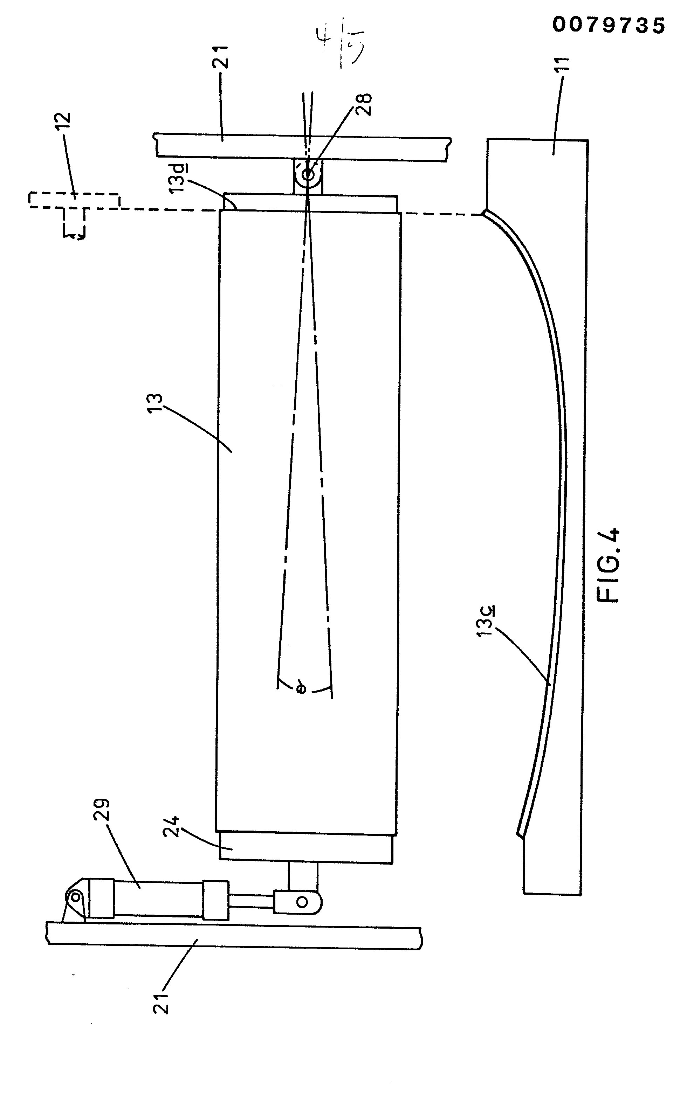

In a preferred embodiment illustrated in Figures 3 and 4, three spools 12, 17 and 18 are again supported between frame structure side plates 21 of a tape laying device generally indicated at 10. A brush 14 consisting of four successive rows of nylon bristles 15 is again provided to force a layer of fibre-reinforced tape material 13 into conformity with the shape of a laying-up surface of a tool 11. The three spools 12, 17 and 18 are powered, preferably by pneumatic motors (not shown).

In this embodiment, tape material 13 from the roll on spool 12 is routed around shaped guides 23, and around tape positioning means consisting of roller 24 and a guide roller 25. Backing strip 13a is separated from tape material 13 around a roller 26 adjacent guide roller 25 and is routed to spool 17, and backing strip 13b is separated after consolidation of the tape material by the brush 14 and is routed over rollers 27 on to spool 18.

The brush 14 is mounted on a pair of pivotally mounted links 36 forming a parallelogram linkage attached to a pneumatic ram 37 adapted to move the brush generally vertically between the tape consolidating position illustrated in full line in Figure 3 and a retracted position shown in broken line. During operation, the pneumatic ram 37 is utilised to vary the tape consolidating pressure applied by the bristles 15 of the brush 14.

Referring now to Figure 4, one end of tape positioning roller 24 is pivotally attached at 28 to one of the side plates 21 for pivotal movement in a vertical plane, and the other end is pivotally attached to one end of a pneumatic jack 29 anchored to the other of the side plates 21. The jack is operative to pivot the roller 24 about attachment 28 through an arc $\theta$ in order to maintain a datum edge 13d of the tape material 13 correctly aligned with a datum comprising the inner face of the rim of spool 12 and a datum on the tool 11 as illustrated schematically in Figure 4.

The position of jack 29 is controlled automatically by a pneumatic sensor 30 (Figure 3) operative to sense the position of the edge of the tape 13 as it passes around the guide roller 25.

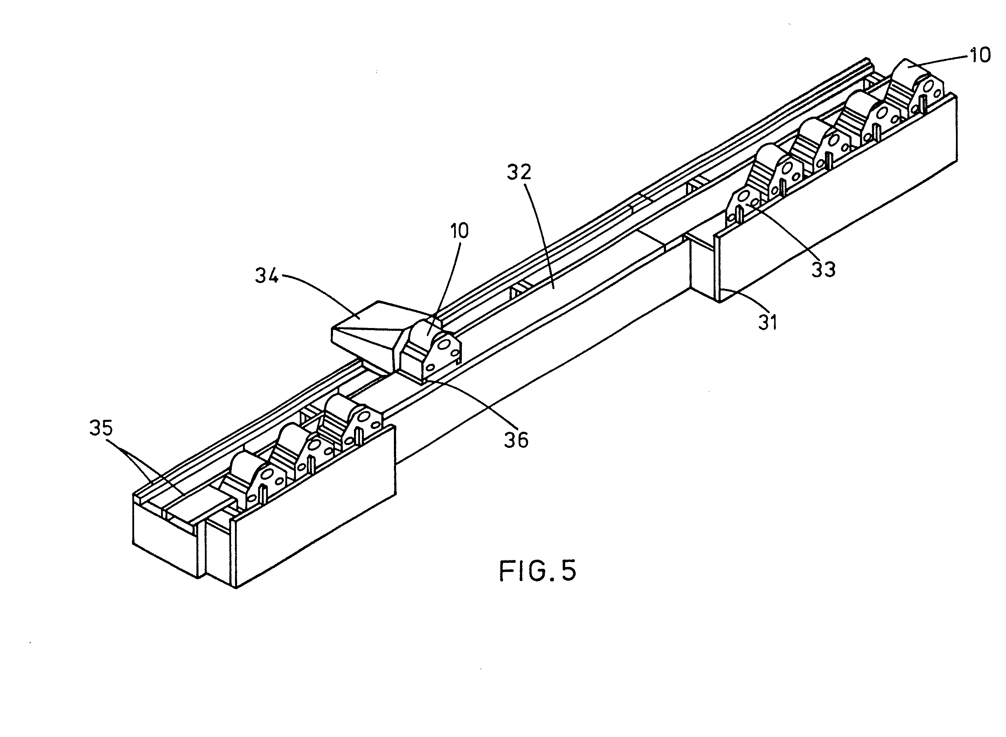

Figure 5 illustrates an apparatus for use in the manufacture of composite articles utilising a plurality of the devices 10 hereinbefore described with reference to the embodiment of Figures 3 and 4.

The apparatus includes a base supporting structure 31 having a longitudinally extending upper tool support surface 32. Eight of the devices 10 of Figures 3 and 4 are used and are wound with different types and/or different widths of fibre-reinforced tape material. The devices 10 are parked in separate areas located at each end of the structure 31 and adjacent to one side of the surface 32, and each device 10 is releasably attached to an individual vertical support plate 33 provided at its parking location.

A powered transporter 34 is supported on parallel longitudinally extending rails 35 at the other side of the tool-support surface 32. The transporter 34 is selectively attachable to the devices 10, and includes power supplies to operate the three spools 12, 17 and 18, as well as the brush positioning mechanism and the tape positioning roller 24. The transporter includes laterally extendable arms 36 adapted to pick up, support and replace the individual devices 10, and also includes a knife mechanism (not shown) adapted to cut the tape material after it has been laid on a tool supported on surface 32. Conveniently, the knife mechanism is extendable laterally from the transporter 34 in the vicinity of the brush 14 which is first raised vertically to the position illustrated in broken line in Figure 3.

Preferably, operation of the transporter 34 is controlled by a computer to pick up and traverse the devices 10 one at a time in a desired sequence to provide an automated tape laying procedure for a lay-up consisting of different types and widths of tape material.

Although described in relation to the laying of fibre-reinforced tape material in a tool having a non-planar laying-up surface, the present invention can be used with advantage in laying-up slabs on a flat bed or in a flat tool. Thus, the pressure applied by the resilient bristles 15 will assist consolidation of such a lay-up and is particularly useful in laying-up a component having tapes of different cross-sectional areas throughout its thickness as is often required in the manufacture of three-dimensional articles.

Whilst several embodiments of the invention have been described and illustrated, it will be understood that many modifications can be made without departing from the scope of the invention as defined in the appended claims. For example, as an alternative to the modification of Figure 2, the device 10 may include a further brush whose bristles would contact the unprotected upper surface of the tape material after removal of backing strip 13b, and preferably, the bristles of the further brush would be of a non-adhesive material such as P.T.F.E. to prevent adhesion to the unprotected tacky surface of the laid tape material. The resilient pressure means may comprise a resilient surface of a roller, and may comprise a compressible layer of any suitable material such as sponge, foam or elastomer to cater for differing heights of the laying-up surface on which the tape material is being laid.

CLAIMS:

1. Apparatus for use in the manufacture of composite articles, characterised by a tape laying device (10) comprising a frame structure movable relatively to a laying-up surface (11) and having a rotatable spool (12) adapted to support a roll of pre-impregnated fibre-reinforced tape material (13), guide means (16, 25) for guiding tape material from the roll onto the said laying-up surface (11), and resilient pressure means (14, 15) adapted to force said tape material into contact with the laying-up surface, whereby a layer of tape material may be laid onto the laying-up surface and in conformity with the shape thereof as the device is moved relatively thereto.

2. Apparatus as claimed in Claim 1, further characterised by second and third rotatable spools (17, 18) so disposed on the frame structure in relation to the first said rotatable spool as to be adapted to receive and store a backing strip from each surface of the tape material.

3. Apparatus as claimed in Claim 2, further characterised in that all of said rotatable spools are power driven.

4. Apparatus as claimed in Claim 1, 2 or 3, further characterised in that the resilient pressure means comprise a brush (14) supported on the frame structure so that its bristles (15) extend towards the laying-up surface.

5. Apparatus as claimed in Claim 4, further characterised in that the brush is located at a distance from the laying-up surface that is less than the free length of the bristles.

6. Apparatus as claimed in Claim 5, further characterised in that the brush comprises at least three successive rows of bristles.

7. Apparatus as claimed in Claim 4, further characterised in that the brush is movably supported on the frame structure for adjustment towards and away from the laying-up surface.

8. Apparatus as claimed in Claim 7, further characterised by pressure sensitive means adapted to selectively vary the position of the brush to adjust the pressure applied to the tape material on the laying-up surface.

9. Apparatus as claimed in any preceding claim, further characterised in that said guide means comprises a curved tape guide member (16) extending in front of the pressure means and around which member the tape material is routed.

10. Apparatus as claimed in any one of Claims 1 to 8, further characterised in that said guide means comprises a roller (25) located in front of the pressure means and around which roller the tape material is routed.

11. Apparatus as claimed in any preceding claim, further characterised by tape positioning means (24, 29, 30) adapted automatically to retain one edge of the tape in register with a datum.

12. Apparatus as claimed in Claim 11, further characterised in that said positioning means comprises a positioning roller (24) around which the tape is routed, one end of the roller being pivotally attached to the frame structure and the other end being attached to means for adjusting the attitude of the roller in the frame structure.

13. Apparatus as claimed in Claim 12, further characterised in that said positioning roller adjusting means is responsive to a signal from a tape positioning sensor (30) operatively associated with said tape guide means.

14. Apparatus as claimed in Claim 13, further characterised in that said sensor is a pneumatic sensor and said positioning roller adjusting means comprises a pneumatic cylinder (29).

15. Apparatus as claimed in any preceding claim, further characterised by wheels (22) at least one of which is power driven, for traversing the frame structure (10) with respect to the laying-up surface (11).

16. Apparatus as claimed in any one of Claims 1 to 14, further characterised by a powered transporter (34) adapted for releasable attachment to the tape laying device to move the latter relatively to the laying-up surface.

17.    Apparatus as claimed in Claim 16, further characterised in that said transporter runs on rails (35) located parallel to and to one side of the laying-up surface for selective attachment to any one of a plurality of tape laying devices (10) parked near the opposite side of the laying-up surface.

18.    Apparatus for use in the manufacture of composite articles, characterised by a base supporting structure (31); a plurality of individual tape laying devices (10) located on the structure and each having a first rotatable spool (12) for supporting a roll of pre-impregnated fibre reinforced tape material (13), guide means (25) for guiding tape from said roll onto a laying-up surface of a tool supported by the base structure, second and third rotatable spools (17, 18) adapted to receive and store backing material from each surface of the tape material, and resilient pressure means (14, 15) adapted to force said tape material on to the tool laying-up surface; and a powered transporter (34) for selective attachment to any one of the tape laying devices and adapted to move such device along the base structure, whereby a layer of tape material may be laid on to the laying-up surface of the tool and in conformity with the shape thereof.

19.    Apparatus as claimed in Claim 18, further characterised in that said transporter includes power means adapted to rotate the spools of the tape laying device to which it is attached.

20.    Apparatus as claimed in Claim 18 or 19, further characterised in that operation of the transporter is controlled by a computer programmed to select a desired tape laying device in order to lay a plurality of different tape materials on the tool laying-up surface in a desired sequence.

FIG.1

0079735

0079735

FIG.2

0079735

FIG.3

FIG.4

0079735

FIG.5